# EUROPÄISCHE PATENTSCHRIFT

(11) **EP 0 622 006 B1**
(45) Veröffentlichungstag und Bekanntmachung des Hinweises auf die Patenterteilung: **02.07.1997**
(21) Anmeldenummer: 94105226.8
(22) Anmeldetag: 02.04.1994
(51) Int. Cl.: A01B 59/042, A01D 78/10, A01B 73/04

(54) **Heuwerbungsmaschine**
Hay-making machine
Maschine de fenaison

(30) Priorität: 06.04.1993 DE 9305014 U
(43) Veröffentlichungstag der Anmeldung: 02.11.1994
(73) Patentinhaber: H. Niemeyer Söhne GmbH & Co. KG, D-48466 Hörstel (DE)
(72) Erfinder: Ungruh, Josef, D-48429 Rheine (DE)

(56) Entgegenhaltungen:
- EP-A- 0 503 395
- EP-A- 0 517 632
- EP-A- 0 539 662
- DE-C- 463 197
- DE-C- 3 711 317
- DE-U- 8 807 054
- DE-U- 9 015 320
- DE-U- 9 103 150
- DE-U- 9 114 316

## Beschreibung

Die Erfindung bezieht sich auf eine Heuwerbungsmaschine, insbesondere Schwader, gemäß dem Oberbegriff des Anspruchs 1.

Aus der DE 40 19 942 A1 ist eine derartige Heuwerbungsmaschine bekannt. Die Laufräder dieser Maschine sind im Zwischenraum zwischen den beiden Kreiselrechen angeordnet. Dadurch wird der Achsabstand zwischen den vertikalen Drehachsen der Kreiselrechen vergrößert. Insbesondere die Längsabmessungen der Maschine nehmen zu, was der Wendigkeit der Maschine schadet und z. B. bei der Arbeit ein größeres erforderliches Vorgewende am Feldende zur Folge hat.

Aufgabe der Erfindung ist es, mit einfachen Mitteln eine Heuwerbungsmaschine gemäß dem Oberbegriff des Anspruchs 1 zu schaffen, die trotz großer Arbeitsbreite bei der Arbeit und im Transport wenig Raum beansprucht.

Die Erfindung löst die Aufgabe dadurch, daß die Deichsel des Maschinengestells der Heuwerbungsmaschine und damit die Koppelpunkte zum Traktor in Fahrtrichtung oder entgegengesetzt längenveränderlich angeordnet ist und durch ein Lenkergetriebe in Abhängigkeit der Stellung der koppelpunkte an der Heuwerbungsmaschine automatisch gesteuert wird, und somit, beim Einsatz, in Abhängigkeit der Stellung des Traktors zur Heuwerbungsmaschine.

Hinsichtlich weiterer wesentlicher vorteilhafter Ausgestaltungen der Erfindung wird auf die Ansprüche 2 bis 13 verwiesen.

Der in einem Ausführungsbeispiel dargestellte Seitenschwader nach der Erfindung wird bei der Arbeit der Maschine bezüglich des Längsabstandes zum Traktor variabel geführt. Dies hat den wesentlichen Vorteil, daß die Maschine trotz großer Arbeitsbreite wenig Raum einnimmt und am Feldende nur ein kleines Vorgewende benötigt. Außerdem lassen sich durch die Vorteile der Erfindung Heuwerbungsmaschinen mit großer Arbeitsbreite auch auf kleineren Parzellen vorteilhaft einsetzen, da die Maschinen durch ihre kurze Bauweise besonders wendig sind.

Ein Lenkergetriebe steuert den Träger der Koppelpunkte und damit den Längsabstand der Maschine zum Traktor. Da die beiden Kreiselrechen in Fahrtrichtung versetzt angeordnet sind, kann auch der Längsabstand, je nachdem ob der Traktor eine Links- oder Rechtskurve fährt, unterschiedlich gesteuert werden, so daß immer eine möglichst kurze Einheit Traktor/Gerät entsteht. Dabei wird durch das Lenkergetriebe die Deichsel der Maschine längenveränderlich im Maschinenrahmen zwangsgeführt.

Die Erfindung sieht vor, daß durch Stellelemente im Lenkergetriebe die Grundeinstellung der Maschine zum Traktor verändert werden kann, um sie den Gegebenheiten optimal anpassen zu können. Dadurch werden beispielsweise die Wirkungskreise der Kreiselrechen je nach Lenkeinschlag so nahe an den Traktor herangeführt, ohne diesen jedoch zu berühren, daß bei maximalem Lenkeinschlag noch genügend Raum für das Schwadgut bleibt.

Das Verteilergetriebe ist vorzugsweise an der Deichsel befestigt. Es ist einerseits durch eine Gelenkwelle mit der Zapfwelle des Traktors und andererseits über jeweils eine Gelenkwelle mit jedem Zinkenkreisel verbunden. Es kann wahlweise auch am Maschinengestell befestigt sein. Die Längenveränderung zwischen Deichsel und Maschinengestell wird nach dem Ausführungsbeispiel der Erfindung durch die Schiebeprofile der beiden Gelenkwellen zu den Zinkenkreiseln ausgeglichen.

Die Erfindung sieht ferner vor, daß die Laufräder, die das Maschinengestell abstützen, vorzugsweise so angeordnet sind, daß ein Laufrad vor dem in Fahrtrichtung hinteren Kreiselrechen und ein Laufrad hinter dem in Fahrtrichtung vorderen Kreiselrechen das Maschinengestell abstützen. Dies trägt ebenfalls zur kompakten Bauweise der Maschine bei. Der Versatz der beiden Kreiselrechen wird auf diese Weise dahingehend genutzt, daß jedes Laufrad im Versatzraum des jeweils anderen Zinkenkreisels angeordnet wird. Dadurch ragt beispielsweise in Längsrichtung das hintere Laufrad nicht über den hinteren Zinkenkreisel hinaus. Durch den großen Abstand zwischen den Laufrädern wird außerdem die Standfestigkeit der Maschine verbessert. Die Erfindung sieht vor, daß die Laufräder wahlweise starr oder schwenkbeweglich zum Maschinengestell ausgebildet sein können. Es ist auch möglich, beispielsweise das hintere Laufrad starr und das vordere als Nachlaufrad um eine vertikale Schwenkachse schwenkbeweglich anzuordnen.

Um die Heuwerbungsmaschine nicht nur in ihrer Längsausdehnung sondern auch in ihrer Transporthöhe kompakt zu halten, sieht die Erfindung vor, daß ein Kreiselrechen über ein Viergelenk um etwa 90° in eine senkrechte Transportstellung geschwenkt wird, dessen einer Lenker vorzugsweise durch einen hydraulischen Stellzylinder gebildet wird, während der zweite Kreiselrechen um einen einfachen Lenker und durch einen weiteren Stellzylinder in die Transportstellung geschwenkt wird. Dabei sind nach der Erfindung die Gelenkpunkte so angeordnet, daß die Zinkenkreisel in einem Hub in ihre Transportstellung geschwenkt werden, ohne daß sie sich gegenseitig behindern und trotzdem die Zinken in der Transportstellung zur Bodenoberfläche einen geringen aber ausreichenden Abstand haben, um eine kleine Gesamttransporthöhe der Maschine zu erhalten. Vorteilhaft ist dabei, daß die Zinkenträger für den Straßentransport nicht demontiert werden müssen.

Die Steuerung der vorzugsweise hydraulischen Stellzylinder zum Schwenken der Kreiselrechen ist so aufeinander abgestimmt, daß diese vom Traktor aus mittels eines einfachwirkenden Steuergerätes betätigbar sind. Mechanische Verriegelungen der Transportstellung sind nach der Erfindung ebenfalls vorgesehen.

Die als Ausführungsbeispiel dargestellte Heuwerbungsmaschine ist ein Schwader zum Seitenschwaden. Nach der Erfindung ist es ebenfalls in vorteilhafter Weise möglich, durch geeignete Maßnahmen einen Schwader so auszurüsten, daß mit ihm ein Seitenschwad oder wahlweise ein Mittelschwad oder zwei Einzelschwaden gebildet werden können.

Weitere Merkmale und Vorteile der Erfindung ergeben sich aus der nachfolgenden Beschreibung und den Zeichnungen, in denen ein Ausführungsbeispiel der Heuwerbungsmaschine nach der Erfindung schematisch, angenähert maßstäblich dargestellt ist. Es zeigt:
- Fig. 1 -: Eine Draufsicht der Heuwerbungsmaschine zum Seitenschwaden in Arbeitsstellung.
- Fig. 2 -: Eine Ansicht entgegen der Fahrtrichtung gemäß Schnitt A-A in Arbeitsstellung.
- Fig. 3 -: Eine Ansicht gemäß Fig. 2 in einer Zwischenstellung zur Transportstellung.
- Fig. 4 -: Eine Ansicht gemäß Fig. 2 in Transportstellung.

Als Ausführungsbeispiel der Erfindung ist eine Heuwerbungsmaschine zum Schwaden von Halmgut dargestellt. Auf die Darstellung unwesentlicher Details ist in den Zeichnungen verzichtet worden.

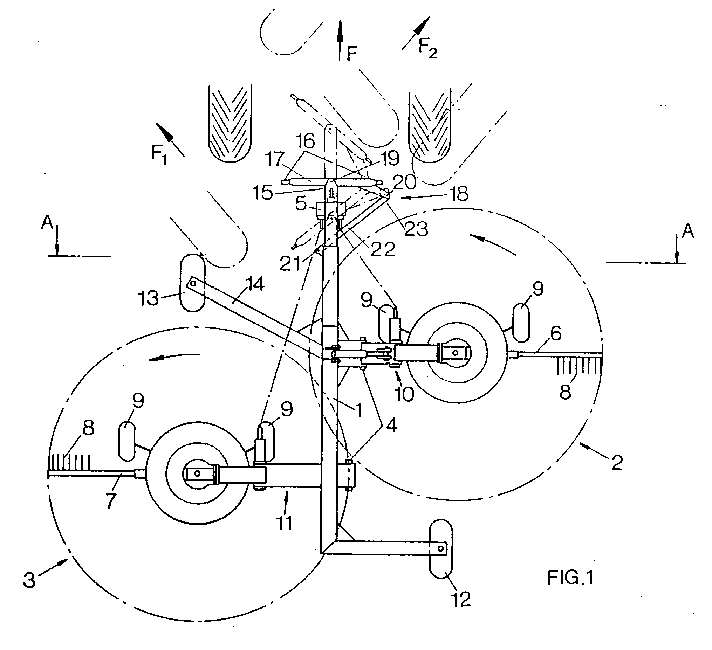

In Fig. 1 ist ein Schwader zum Seitenschwaden in einer Draufsicht dargestellt. Er besteht im wesentlichen aus zwei gleichsinnig angetriebenen Kreiselrechen (2,3), die mittels Gelenkwellen von der Zapfwelle des Traktors über ein Verteilergetriebe (5) angetrieben werden. Sie haben in Arbeitsstellung etwa vertikale Drehachsen und mehrere über Kurvenbahnen gesteuerte Zinkenarme (6,7) mit Zinken (8), die das Schwadgut zu einem Seitenschwad zusammenrechen. Die Arbeitskreise der Zinken (8) überlappen sich, wobei der Kreiselrechen (3), der in Fahrtrichtung (F) gegenüber dem Kreiselrechen (2) zurückversetzt ist, ohne daß sich die Zinkenarme (6,7) mit den Zinken (8) an der Überlappungsstelle berühren, da die Zinkenarme (6) mit den Zinken (8) des Kreiselrechens (2) so gesteuert sind, daß sie im Überlappungsbereich über die Zinkenarme (7) des Kreiselrechens (3) hinweggehoben werden.

Die Kreiselrechen (2,3) werden durch Stützräder (9) höheneinstellbar abgestützt, wodurch sich die Arbeitshöhe der Zinken (8) einstellt. Der Kreiselrechen (2) ist über einen Ausleger (10) um eine fahrtrichtungsparallele Achse (4) schwenkbar mit dem Maschinengestell (1) verbunden. Der Kreiselrechen (3) ist über einen Ausleger (11), der ebenfalls um eine fahrtrichtungsparallele Achse (4) schwenkbar ist, mit dem Maschinengestell (1) verbunden. Das Maschinengestell (1) wird über ein rechtes Laufrad (12), das etwa in der Mitte hinter dem Kreiselrechen (2) angeordnet ist und ein linkes Laufrad (13), das über eine Stütze (14) mit dem Maschinengestell (1) verbunden ist, getragen. Das Laufrad (13) ist vorzugsweise in Fahrtrichtung vor dem Kreiselrechen (3) angeordnet.

Die Verbindung zu den nicht dargestellten Unterlenkern des Traktors wird über Koppelpunkte (16) hergestellt. Sie sind Teil eines Trägers (17), der über eine vertikale Schwenkachse (19) beweglich ist. Ein Lenkergetriebe (18) steuert die Deichsel (15) und dadurch den Abstand zwischen Traktor und Schwader. Mit dem Träger (17) ist einseitig ein Arm (23) fest verbunden, an dessen Ende ein Anlenkpunkt (20) angeordnet ist. Am vorderen Ende des Haupttragrohres des Maschinengestells (1) ist ein Anlenkpunkt (21) befestigt. Zwischen den Anlenkpunkten (20,21) befindet sich ein Lenker (22).

Wird die Maschine bei der Arbeit in Fahrtrichtung (F) vom Traktor gezogen, befindet sich die Maschine zum Traktor in der in Fig. 1 als sichtbare Linien dargestellten Stellung. Fährt der Traktor beispielsweise eine Linkskurve gemäß Fahrtrichtung (F₁) wird der Träger (17) mit den Koppelpunkten (16) in eine Stellung geschwenkt, wie sie in Fig. 1 strichpunktiert dargestellt ist. Dabei wird durch den Lenker (22) die Deichsel (15) in das Hauptrohr des Maschinengestells (1) geschoben. Es verkürzt sich also der Abstand zwischen Maschine und Traktor, so daß diese näher an den Traktor herangeführt wird. Das Gespann Traktor/Schwader wird in seinen Längsabmessungen kürzer, so daß sich der Raumbedarf für das Wenden auf dem Vorgewende des Feldes verringert. Bei kleineren Parzellen wird die Maschine dadurch außerdem beweglicher.

Wird durch eine Rechtskurve der Traktor in die Fahrtrichtung (F₂) gebracht, wird die Deichsel (15) gegenüber dem Maschinengestell (1) teleskopartig verlängert, so daß eine Berührung zwischen Traktor und Kreiselrechen (2) vermieden wird. Diese Stellung ist in Fig. 1 ebenfalls strichpunktiert gezeichnet.

Durch eine nicht dargestellte Längenveränderung beispielsweise des Lenkers (22) des Lenkgetriebes (18) kann die Grundeinstellung des Abstandes der Maschine zum Traktor den Gegebenheiten vorteilhaft angepaßt werden.

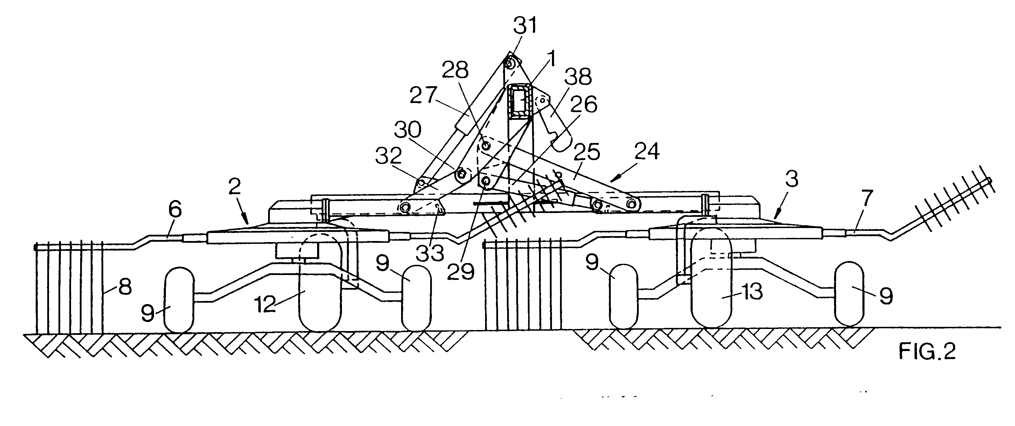

Die Fig. 2 zeigt den Schwader in Arbeitsstellung in einer Ansicht gemäß Schnitt A-A in Fig. 1. Der Kreiselrechen (3) ist über ein Viergelenk (24) mit dem Maschinengestell (1) verbunden. Das Viergelenk (24) besteht im wesentlichen aus einem Lenker (25) und einem beispielsweise hydraulischen, einfachwirkenden Stellzylinder (26). Die gestellseitigen Gelenkpunkte (28,29) des Viergelenks (24) sind vorzugsweise jenseits der Mitte des Maschinengestells (1) angeordnet.

Der Kreiselrechen (2) ist über die Gelenkpunkte (30,31), den vorzugsweise hydraulischen, einfachwirkenden Stellzylinder (27) und den Lenker (32) mit dem Maschinengestell (1) verbunden. Am festen Teil des Kreiselrechens (2) ist ein Anschlag (33) vorgesehen, der mit dem Lenker (32) korrespondiert. In Arbeitsstellung ist zwischen dem Lenker (32) und dem Anschlag (33) soviel Spiel, daß der Kreiselrechen (2) sich ohne Behinderung den Bodenunebenheiten in der Höhe anpassen kann.

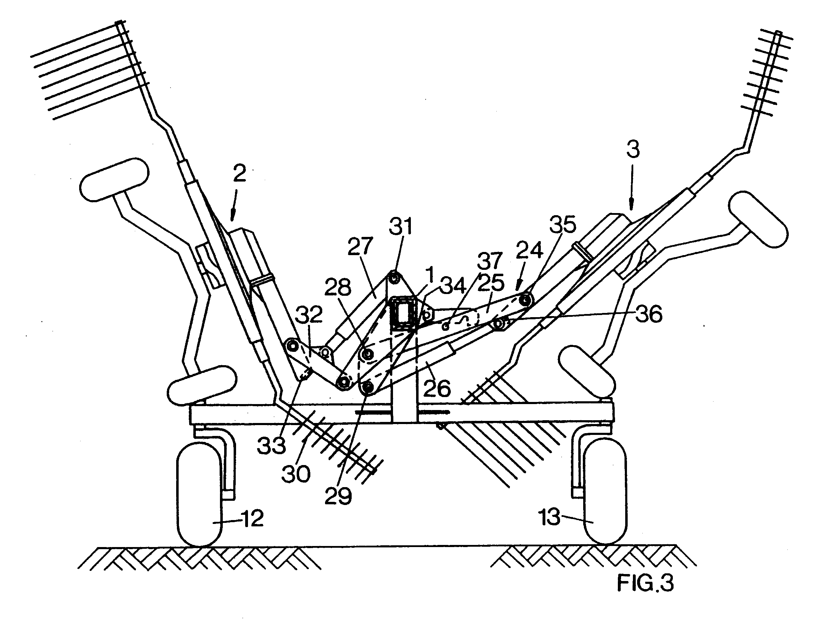

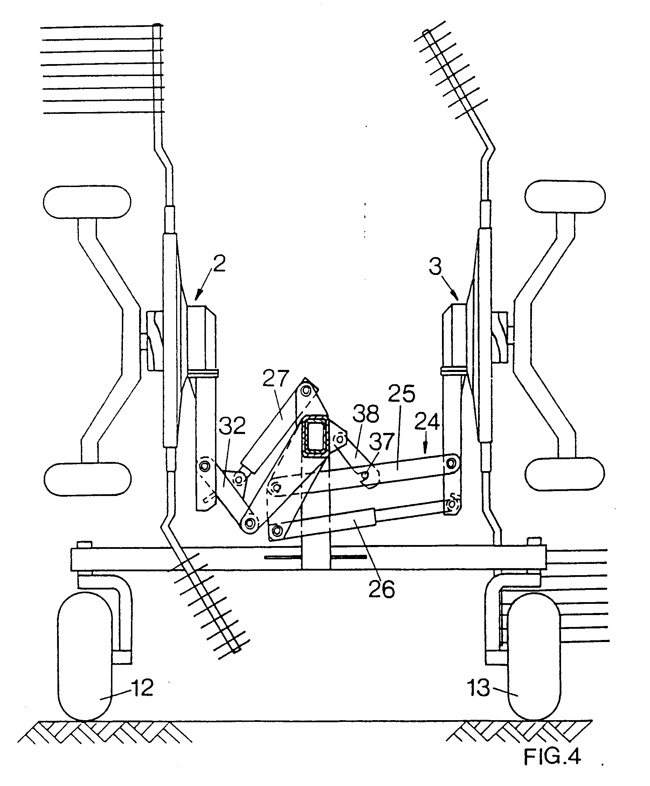

Um den Kreiselrechen (2) anheben zu können, wird die Stangenseite des Stellzylinders (27) vom Traktor aus mit Drucköl beaufschlagt. Er hebt dadurch den Lenker (32) um den Gelenkpunkt (30) an, der Anschlag (33) legt sich an den Lenker (32) an und der Kreiselrechen (2) wird über eine Zwischenstellung (Fig. 3) in die endgültige Transportstellung in einem Hub (Fig. 4) angehoben.

Beim Ausheben des Kreiselrechens (3) wird der Stellzylinder (26) vom Traktor aus mit Drucköl beaufschlagt, die Kolbenstange fährt aus und hebt den Kreiselrechen (3) über das Viergelenk (24) um die Gelenkpunkte (28,29) soweit an, bis der Lenker (25) am Anschlagpunkt (34) am Maschinengestell (1) zur Anlage kommt (Fig. 3). Beim Anheben des Kreiselrechens (3) hat sich ein Anschlag (36) an den Lenker (25) angelegt und diese Stellung solange fixiert, bis der Lenker (25) andererseits an dem Anschlag (34) zur Anlage kommt. Der Stellzylinder (26) bewegt nun den Kreiselrechen (3) um den Schwenkpunkt (35) weiter in die Senkrechte, wobei durch das Eigengewicht und die Annäherung des Viergelenks (24) an ein Parallelogramm der Anschlag (34) wieder verlassen wird und eine Raste (37) am Lenker (25) in einen Riegel (38) einrastet. Der Riegel (38) ist beispielsweise durch einen nicht dargestellten Seilzug mit dem Traktor verbunden, so daß die Bedienungsperson beim Ablassen des Kreiselrechens (3) in umgekehrter Reihenfolge den Riegel (38) lösen kann. Wahlweise kann der Riegel (38) auch federbelastet sein.

Fig. 4 stellt eine Ansicht des Schwaders gemäß dem Schnitt A-A in Fig. 1 in der endgültigen Transportstellung dar.

## Patentansprüche

1. Heuwerbungsmaschine, insbesondere Schwader, zum Schwaden von Halmgut, mit mindestens zwei um etwa senkrechte Drehachsen umlaufend angetriebenen höhenverstellbaren Kreiselrechen (2,3), die über ein Maschinengestell (1) mit dem Traktor verbunden ist, wobei sich das Maschinengestell (1) über Laufräder auf dem Boden abstützt und bei dem jeder Kreiselrechen (2,3) zu Transportzwecken um eine etwa fahrtrichtungsparallele Achse (4) um etwa 90° hochschwenkbar ist, dadurch gekennzeichnet, daß die Deichsel (15) des Maschinengestells (1) der Heuwerbungsmaschine und damit die Koppelpunkte (16) zum Traktor in Fahrtrichtung (F) oder entgegengesetzt längenveränderlich angeordnet ist und durch ein Lenkergetriebe (18) in Abhängigkeit der Stellung der koppelpunkte (16) an der Heuwerbungsmaschine automatisch gesteuert wird, und somit, beim Einsatz, in Abhängigkeit der Stellung des Traktors zur Heuwerbungsmaschine.

2. Heuwerbungsmaschine nach Anspruch 1, dadurch gekennzeichnet, daß der Träger (17) der Koppelpunkte (16) um eine etwa vertikale Schwenkachse (19) schwenkbar ist.

3. Heuwerbungsmaschine nach Anspruch 1 oder 2, dadurch gekennzeichnet, daß die Deichsel (15) teleskopartig im Hauptträger des Maschinengestells (1) geführt ist.

4. Heuwerbungsmaschine nach einem oder mehreren der Ansprüche 1 bis 3, dadurch gekennzeichnet, daß der Träger (17) der Koppelpunkte (16) der Deichsel (15) durch das Lenkergetriebe (18) so gesteuert wird, daß beim Lenkeinschlag des Traktors die Wirkungskreise der Kreiselrechen (2,3) in Fahrtrichtung (F) jeweils nahe an den Traktor herangeführt werden.

5. Heuwerbungsmaschine nach einem oder mehreren der Ansprüche 1 bis 4, dadurch gekennzeichnet, daß der Lenker (22) des Lenkergetriebes (18) einerseits gelenkig mit dem Maschinengestell (1) und andererseits gelenkig mit dem Träger (17) der Koppelpunkte (16) verbunden ist.

6. Heuwerbungsmaschine nach Anspruch 5, dadurch gekennzeichnet, daß der Abstand zwischen den Anlenkpunkten (20,21) des Lenkers (22) veränderbar ist.

7. Heuwerbungsmaschine nach einem oder mehreren der Ansprüche 1 bis 6, dadurch gekennzeichnet, daß die vorzugsweise zwei Laufräder (12,13) zur Abstützung des Maschinengestells (1) so angeordnet sind, daß ein Laufrad (13) vor dem in Fahrtrichtung (F) hinteren Kreiselrechen (3) und ein Laufrad (12) hinter dem in Fahrtrichtung (F) vorderen Kreiselrechen (2) das Maschinengestell (1) abstützen.

8. Heuwerbungsmaschine nach einem oder mehreren der Ansprüche 1 bis 7, dadurch gekennzeichnet, daß ein Verteilergetriebe (5) zum Antrieb der Kreiselrechen (2,3) an der Deichsel (15) anbringbar ist.

9. Heuwerbungsmaschine nach einem oder mehreren der Ansprüche 1 bis 8, dadurch gekennzeichnet, daß ein oder beide Laufräder (12,13) als Nachlaufräder schwenkbeweglich zum Maschinengestell ausgebildet sind.

10. Heuwerbungsmaschine nach einem oder mehreren der Ansprüche 1 bis 9, dadurch gekennzeichnet, daß ein Kreiselrechen (3) mittels eines Viergelenks (24) von der Arbeitsstellung in die Transportstellung um etwa 90° schwenkbar ist.

11. Heuwerbungsmaschine nach Anspruch 10, dadurch gekennzeichnet, daß der untere Lenker des Viergelenks (24) als längenveränderliches Stellglied ausgebildet ist.

12. Heuwerbungsmaschine nach einem der Ansprüche 10 oder 11, dadurch gekennzeichnet, daß das längenveränderliche Stellglied vorzugsweise durch einen einfachwirkenden hydraulischen Stellzylinder (26) gebildet wird.

13. Heuwerbungsmaschine nach einem der Ansprüche 10 bis 12, dadurch gekennzeichnet, daß das Viergelenk (24) in der Transportstellung (24) des Kreiselrechens (3) durch einen Riegel (38) verriegelbar ist, der beim Absenken des Viergelenks (24) automatisch einrastet.

## Claims

1. A haymaking machine, and a swathing machine in particular, for the swathing of cereal crops, with at least two height-adjustable circular rakes (2,3) driven so as to rotate about approximately perpendicular axes of rotation, which are connected to the tractor by means of a machine frame (1), in which situation the machine frame (1) is supported on the ground by wheels and in which, for transport purposes, each circular rake (2,3) can be pivoted upwards about 90° about an axis (4) parallel to the direction of travel, characterised in that the drawbar (15) of the machine frame (1) of the haymaking machine, and therefore the coupling points (16) to the tractor, are arranged in the direction of travel (F) or counter to it, in a manner such that the length can be modified, and is automatically controlled as a function of the position of the coupling points (16) on the haymaking machine, and therefore, during use, as a function of the position of the tractor in relation to the haymaking machine.

2. A haymaking machine according to Claim 1, characterised in that the carrier element (17) of the coupling points (16) is capable of pivoting about a perpendicular pivot axis (19).

3. A haymaking machine according to Claims 1 or 2, characterised in that the drawbar (15) is guided telescopically in the main carrier element of the machine frame (1).

4. A haymaking machine according to one or more of Claims 1 to 3, characterised in that the carrier element (17) of the coupling points (16) of the drawbar (15) is controlled by the steering gear (18) in such a way that, when the tractor is at full steering lock, the circle of effect of the circular rakes (2,3) in the direction of travel (F) is in each case brought in close to the tractor.

5. A haymaking machine in accordance with one or more of Claims 1 to 4, characterised in that the steering element of the steering gear (18) is connected on one side in a jointed manner to the machine frame (1) and, on the other, is connected in a jointed manner to the carrier element (17) of the coupling points (16).

6. A haymaking machine according to Claim 5, characterised in that the interval between the steering points (20,21) of the steering element (22) is capable of being changed.

7. A haymaking machine according to one or more of Claims 1 to 6, characterised in that the wheels (12,13) for supporting the machine frame (1), two for preference, are arranged in such a way that one wheel (12) supports the machine frame (1) behind the front circular rake (2), seen in the direction of travel (F).

8. A haymaking machine according to one or more of Claims 1 to 7, characterised in that a distribution gear system (5) can be located for powering the circular rakes (2,3) on the drawbar (15).

9. A haymaking machine according to one or more of Claims 1 to 8, characterised in that one or both wheels (12,13) are designed as trailing wheels, capable of pivotal movement in relation to the machine frame.

10. A haymaking machine according to one or more of Claims 1 to 9, characterised in that one circular rake (3) is capable of being pivoted through about 90° from the operating position into the transport position by means of a four-way joint element (24).

11. A haymaking machine according to Claim 10, characterised in that the lower steering element of the four-way joint element (24) is designed as an actuator element, capable of lenth modification.

12. A haymaking machine according to Claim 10 or 11, characterised in that the adjusting element capable of length modification by means of, for preference, a single-action hydraulic actuating cylinder (26)

13. A haymaking machine according to one of Claims 10 to 12, characterised in that the four-way joint element (24) in the transport position (24) of the circular rake (3) is capable of being locked by means of a locking element (38), which engages automatically when the four-way joint is lowered.

## Revendications

1. Machine de fenaison, notamment andaineuse, pour former des andains de produits en tiges, comprenant au moins deux râteaux rotatifs (2,3) réglables en hauteur, entraînés autour de deux axes de rotation, sensiblement verticaux, tournants, eux-mêmes reliés par le châssis (1) de la machine au tracteur, le châssis (1) s'appuyant sur le sol par des roues de roulement et chaque râteau rotatif (2,3) peut être relevé d'environ 90° par basculement autour d'un axe (4) sensiblement parallèle à la direction de circulation pour le transport, caractérisée en ce que le timon (15) du châssis (1) de la machine, et ainsi les points d'attelage (16) avec le tracteur, est de longueur variable dans la direction de déplacement (F) ou dans la direction opposée et il est commandé automatiquement par un mécanisme de direction (18) en fonction de la position des points d'attelage (16) sur la machine, et ainsi en cours de fonctionnement, suivant la position du tracteur par rapport à la machine.

2. Machine selon la revendication 1, caractérisée en ce que la poutre (17) des points d'attelage (16) peut pivoter autour d'un axe de pivotement (19) sensiblement vertical.

3. Machine selon la revendication 1 ou 2, caractérisée en ce que le timon (15) est guidé de manière télescopique dans la poutre principale du châssis (1) de la machine.

4. Machine selon une ou plusieurs des revendications 1 à 3, caractérisée en ce que la poutre (17) des points d'attelage (16) du timon (15) est commandée par le mécanisme de direction (18) et en cas d'inflexion de direction du tracteur, le cercle d'action décrit par les râteaux rotatifs (2,3) peut être rapproché à proximité du tracteur dans la direction de déplacement (F).

5. Machine selon une ou plusieurs des revendications 1 à 4, caractérisée en ce que le bras (22) du mécanisme de direction (18) est relié d'un côté de manière articulée au châssis (1) de la machine, et de l'autre côté de manière articulée à la poutre (17) des points d'attelage (16).

6. Machine selon la revendication 5, caractérisée en ce que la distance entre les points d'articulation (20,21) du bras (22) est variable.

7. Machine selon une ou plusieurs des revendications 1 à 6, caractérisée en ce que de préférence les deux roues de roulement (12,13) sont prévues pour soutenir le châssis (1) de la machine pour qu'une roue (13) se trouve en amont du râteau rotatif (3) arrière dans le sens de déplacement (F) et une roue (12) se trouve derrière le râteau rotatif (2), avant, dans le sens de déplacement (F) pour soutenir le châssis (1) de la machine.

8. Machine selon une ou plusieurs des revendications 1 à 7, caractérisée par une transmission de distribution (5) sur le timon (15) pour entraîner les râteaux rotatifs (2,3).

9. Machine selon une ou plusieurs des revendications 1 à 8, caractérisée en ce qu'une ou deux roues de roulement (12,13) sont des roues suiveuses, montées pivotantes sur le châssis de la machine.

10. Machine selon une ou plusieurs des revendications 1 à 9, caractérisée en ce qu'un râteau rotatif (3) est monté basculant par un quadrilatère articulé (24) d'environ 90° entre la position de travail et la position de transport.

11. Machine selon la revendication 10, caractérisée en ce que le bras inférieur du quadrilatère (24) est un organe de réglage de longueur variable.

12. Machine selon l'une des revendications 10 ou 11, caractérisée en ce que l'organe de réglage de longueur variable est constitué de préférence par un vérin de réglage hydraulique (26) à simple effet.

13. Machine selon l'une des revendications 10 à 12, caractérisée en ce que le quadrilatère articulé (24) est verrouillable par un verrou (38) en position de transport (24) du râteau rotatif (3), ce verrou s'accrochant automatiquement lorsqu'on abaisse le quadrilatère articulé (24).
